# EUROPÄISCHE PATENTANMELDUNG

(11) **EP 2 113 675 A1**
(43) Veröffentlichungstag der Anmeldung: **04.11.2009**
(21) Anmeldenummer: 08008134.2
(22) Anmeldetag: 28.04.2008
(51) Int. Cl.: F16D 25/0638

(54) **Lamellenkupplung**

(71) Anmelder: Hoerbiger Antriebstechnik GmbH, 86956 Schongau (DE)
(72) Erfinder: Sielaff, Tilo, 86981 Kinsau (DE); Oswald, Johann, 82438 Eschenlohe (DE); Schuster, Stefan, 86842 Türkheim (DE)
(74) Vertreter: Kitzhofer, Thomas

(57) **Zusammenfassung**

Die vorliegende Erfindung betrifft eine Lamellenkupplung (1) mit einem Lamellenpaket (2) und mit einer Aktuatoreinrichtung (4) für das Lamellenpaket (2), wobei die Aktuatoreinrichtung (4) eine Fluiddruckquelle (5) aufweist, die mit einer Kolbeneinrichtung (6) in Fluidverbindung steht.

## Beschreibung

Die Erfindung betrifft eine Lamellenkupplung gemäß dem Oberbegriff des Anspruches 1.

Bei einer bekannten gattungsgemäßen Lamellenkupplung besteht das Problem, dass aufgrund der erforderlichen Kräfte zum Zusammendrücken des Lamellenpakets relativ große Bauräume erforderlich sind, da ansonsten die Kolbenflächen zur Erzeugung der Anpresskräfte nicht ausreichend sind.

Es ist daher Aufgabe der vorliegenden Erfindung, eine Lamellenkupplung der im Oberbegriff des Anspruches 1 angegebenen Art zu schaffen, die es möglich macht, vom Prinzip her beliebig große Betätigungskräfte bei gleichzeitiger Bauraumreduzierung zu erreichen.

Die Lösung dieser Aufgabe erfolgt durch die Merkmale des Anspruches 1.

Dadurch, dass die Fluiddruckquelle der Aktuatoreinrichtung mit einer Kolbeneinrichtung in Fluidverbindung steht, ist es möglich, zunächst einen modularen Aufbau der Aktuatoreinrichtung zu erreichen, der es vom Prinzip her möglich macht, beliebig große Kräfte aufzubauen und gleichzeitig eine Bauraumreduzierung durch eine vergrößerte Kolbenfläche der Kolbeneinrichtung zu erreichen, da es mit der Kolbeneinrichtung möglich ist, eine Aneinanderreihung mehrerer Kolben und eine damit einhergehende Vergrößerung der Kolbenfläche zu erreichen.

Ferner ist es möglich, die Aktuierungskraft durch die Anzahl der Kolben der Kolbeneinrichtung und den Durchmesser der Kolben einzustellen. Somit ist eine Aktuierung sowohl zum Öffnen wie auch zum Schließen der Kupplung möglich.

Hierbei ist erfindungsgemäß eine Mehrzahl von Kolben, also zumindest eine Anzahl von zwei Kolben, vorgesehen, die mit Hilfe des aufzubauenden Fluiddruckes, betätigbar sind. Der Fluiddruck wird durch Einleiten eines Fluides in die zugeordneten Kolbenräume erzeugt. Mit Hilfe der Kolben kann die zum Schließen oder Öffnen der Kupplung erforderliche Anpresskraft bzw. Lösekraft bei kleinem Bauraum erreicht werden.

Je nach benötigter Aktuierungskraft und vorhandenem Druck kann die Kolbenfläche variiert werden. Dies kann über die Anzahl der Kolbenräume grob eingestellt werden, wobei die Feineinstellung durch Verkleinern bzw. Vergrößern des jeweiligen Kolbendurchmessers erfolgt.

Die Unteransprüche haben vorteilhafte Weiterbildungen der Erfindung zum Inhalt.

Die Verwendung von Gleichteilen ermöglicht vorzugsweise den modularen Aufbau der erfindungsgemäßen Kupplung. Theoretisch können beliebig viele Kolbenflächen aneinandergereiht werden, um die benötigte Anpresskraft zu erreichen.

Die einzelnen zugeordneten Gehäusesegmente der Kolben können beispielsweise durch außenliegende Schrauben miteinander verbunden werden.

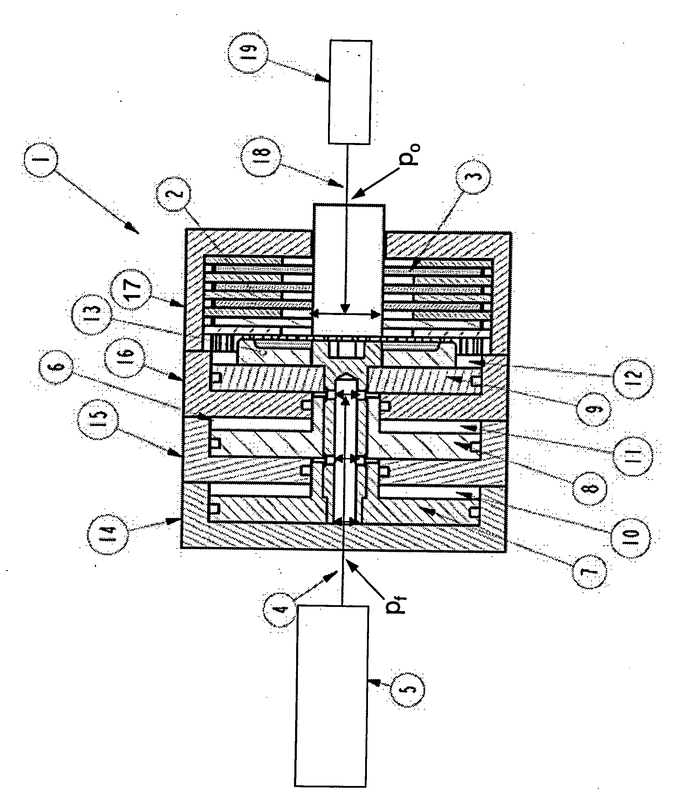

Weitere Einzelheiten, Vorteile und Merkmale der vorliegenden Erfindung ergeben sich aus nachfolgender Beschreibung eines Ausführungsbeispiels anhand der Zeichnung.

Die einzige Figur der Zeichnung zeigt eine schematisch vereinfachte Darstellung einer erfindungsgemäßen Kupplung 1, die im Beispielsfalle als Lamellenkupplung ausgebildet ist.

Die Lamellenkupplung 1 weist ein Lamellenpaket 2 und eine Aktuatoreinrichtung 4 auf, die zum Zusammendrücken und Lösen der Lamellen des Lamellenpaketes 2 dient.

Die Aktuatoreinrichtung 4 weist eine als Block vereinfacht dargestellte Fluiddruckquelle 5 auf, die mit einer Kolbeneinrichtung 6 der Aktuatoreinrichtung 4 in Fluidverbindung steht, was durch die in der Figur eingezeichneten Pfeile P_{F} symbolisiert ist.

Die Kolbeneinrichtung 6 weist im dargestellten Fall drei Kolben 7, 8 und 9 auf, die in zugeordneten Kolbenräumen 10, 11 und 12 angeordnet sind. Die Kolbenräume 10, 11, 12 können, wie durch die eingezeichneten Pfeile P_{F} symbolisiert, mit Fluid (Luft oder Hydraulikflüssigkeit) beaufschlagt werden, um den erforderlichen Fluiddruck zur Betätigung der miteinander verbundenen Kolben zu erreichen.

Die Aktuatoreinrichtung 4 weist ferner ein Betätigungsteil 13 auf, dass mit den im Beispielsfalle drei vorgesehenen Kolben 7, 8 und 9 in Wirkverbindung steht und dass die aufgebrachte Anpress- bzw. Lösekraft auf das Kolbenpaket 2 aufbringt.

Wie zuvor erläutert, kann die Fluiddruckquelle 5 entweder eine Luftdruckquelle oder eine Hydraulikflüssigkeitsdruckquelle sein.

Die Einleitung des Fluides in die zugeordneten Kolbenräume 10, 11, 12 kann auf beiden Seiten der Kolben 7, 8 und 9 erfolgen, je nach dem, ob die Kupplung geschlossen oder geöffnet werden soll.

Um eine Kühlung zu erreichen, ist ferner ein separater Ölkreislauf 18 vorgesehen, der durch den Block 19 als Ölquelle und die Pfeile P_{O} symbolisiert ist, die das Lamellenpaket 2 durchströmen und zurückgeleitet werden können.

Wie sich aus der zeichnerischen Darstellung ferner ergibt, weist die Kupplung 1 eine Mehrzahl von Gehäuseteilen 14, 15, 16 und 17 auf, wobei die Kolbeneinrichtung 6 in den Gehäuseteil 14, 15, 16 angeordnet ist, während das Lamellenpaket 2 im Gehäuseteil 17 untergebracht ist, wie sich dies im Einzelnen aus der Figur ergibt.

Das Betätigungsteil 13 kann entweder einstückig mit dem Kolben 9 verbunden sein oder ein separates Teil bilden, um so die Anzahl der Gleichteile zu erhöhen und damit den Aufbau der Lamellenkupplung 1 zu vereinfachen.

Ferner ist es vom Prinzip her möglich, die Kolbeneinrichtung 6 durch die Aktuatoreinrichtung 4 nur in einer Richtung zum Zusammendrücken des Lamellenpaketes 2 zu betätigen, da es zum Lösen des Lamellenpaketes 2 üblicherweise ausreicht, dass sich die Lamellen 3 aufgrund ihrer Unebenheiten und des zwischen den Lamellen 3 befindlichen Öls ohne zusätzliche Hilfe voneinander lösen. Gegebenenfalls ist es jedoch auch möglich, die Kolbeneinrichtung 6 durch Einleiten von Fluid in die Kolbenräume in zur Anpressrichtung entgegengesetzter Richtung zu betätigen, um das Ausrücken der Kupplung zu erleichtern.

Neben der voranstehenden schriftlichen Offenbarung der Erfindung wird zur Ergänzung der Offenbarung hiermit explizit auf die zeichnerische Darstellung der erfindungsgemäßen Kupplung 1 verwiesen.

### Bezugszeichenliste

- 1: Kupplung, insbesondere Lamellenkupplung
- 2: Lamellenpaket
- 3: Lamellen
- 4: Aktuatoreinrichtung
- 5: Fluiddruckquelle
- 6: Kolbeneinrichtung
- 7, 8, 9: Kolben
- 10, 11, 12: Kolbenräume
- 13: Betätigungsteil
- 14, 15, 16, 17: Gehäuseteile
- 18: Ölkreislauf
- 19: Ölquelle
- P_{F}: Pfeile zur Symbolisierung des Fluidflusses
- P_{O}: Pfeile zur Symbolisierung des Ölflusses

## Patentansprüche

1. Lamellenkupplung (1)
- mit einem Lamellenpaket (2), und
- mit einer Aktuatoreinrichtung (4) für das Lamellenpaket (2),
**dadurch gekennzeichnet,**
- **dass** die Aktuatoreinrichtung (4) eine Fluiddruckquelle (5) aufweist, die mit einer Kolbeneinrichtung (6) in Fluidverbindung steht, und
- **dass** die Kolbeneinrichtung (6) eine Mehrzahl von Kolben (7, 8, 9) aufweist, die in zugeordneten Kolbenräumen (10, 11, 12) angeordnet und miteinander verbunden sind.

2. Lamellenkupplung nach Anspruch 1, **dadurch gekennzeichnet, dass** die Kolbeneinrichtung (6) zumindest einen Kolben (7, 8, 9) aufweist, der in einem mit Fluid beaufschlagbaren Kolbenraum (10, 11, 12) durch Fluiddruck verschiebbar angeordnet ist.

3. Lamellenkupplung nach Anspruch 1 oder 2, **dadurch gekennzeichnet, dass** die Kolbeneinrichtung (6) mit einem Betätigungsteil (13) versehen ist, dass mit dem Lamellenpaket (2) in Wirkverbindung bringbar ist.

4. Lamellenkupplung nach einem der Ansprüche 1 bis 3, **dadurch gekennzeichnet, dass** die Kolben (7, 8, 9) und die Kolbenräume (10, 11, 12) in zugeordneten Gehäuseteilen (14, 15, 16) angeordnet sind, die miteinander verbindbar sind.

5. Lamellenkupplung nach einem der Ansprüche 1 bis 4, **dadurch gekennzeichnet, dass** die Fluiddruckquelle (5) eine Luftdruckquelle ist.

6. Lamellenkupplung nach einem der Ansprüche 1 bis 4, **dadurch gekennzeichnet, dass** die Fluiddruckquelle (5) eine Hydraulikdruckquelle ist.

7. Lamellenkupplung nach einem der Ansprüche 1 bis 6, **dadurch gekennzeichnet, dass** das Lamellenpaket (2) mit einem separaten Ölkreislauf (17) versehen ist.
